# EUROPÄISCHE PATENTSCHRIFT

(11) **EP 2 786 133 B1**
(45) Veröffentlichungstag und Bekanntmachung des Hinweises auf die Patenterteilung: **11.01.2023**
(21) Anmeldenummer: 12791193.1
(22) Anmeldetag: 27.11.2012
(51) Int. Cl.: G01N 27/406, G01N 27/407

(54) **VERFAHREN ZUR ERMITTLUNG EINES LAMBDAWERTES ODER EINER SAUERSTOFFKONZENTRATION EINES GASGEMISCHS SOWIE ENTSPRECHENDER VERBRENNUNGSMOTOR**
METHOD FOR DETERMINING A LAMBDA VALUE OR AN OXYGEN CONCENTRATION OF A GAS MIXTURE AND CORRESPONDING COMBUSTION ENGINE
PROCEDE DE DETERMINATION D'UNE VALEUR LAMBDA OU D'UNE CONCENTRATION EN OXYGENE D'UN MELANGE GAZEUX ET MOTEUR A COMBUSTION CORRESPONDANT

(30) Priorität: 29.11.2011 DE 102011087312
(43) Veröffentlichungstag der Anmeldung: 08.10.2014
(73) Patentinhaber: Volkswagen AG, 38440 Wolfsburg (DE)
(72) Erfinder: HAHN, Hermann, Carlton VIC 3053 (AU)
(74) Vertreter: Gulde & Partner
(86) Internationale Anmeldenummer: PCT/EP2012/073696
(87) Internationale Veröffentlichungsnummer: WO 2013/079471

(56) Entgegenhaltungen:
- DE-A1- 10 036 129
- DE-A1-102007 015 362
- JP-A- 2 293 655
- US-A- 5 270 009
- Redaktion: "Schadstoffemissionen" In: "Kraftfahrtechnisches Taschenbuch", 1 October 2003 (2003-10-01), Robert Bosch GmbH, Plochingen, XP055476680, pages 550-551,

## Beschreibung

Die Erfindung betrifft ein Verfahren zur Ermittlung eines Lambdawertes oder einer Sauerstoffkonzentration eines Gasgemischs wie in Anspruch 1 definiert.

Es ist bekannt, die Sauerstoffkonzentration in einem Gasgemisch mittels einer sauerstoffempfindlichen Gassonde, einer Lambdasonde, zu bestimmen. Dabei stellt die Lambdasonde ein von dem Sauerstoffgehalt des Gasgemischs abhängiges Ist-Sondensignal bereit, bei dem es sich üblicherweise um eine Sondenspannung handelt. Dieses Sondensignal wird mittels einer gespeicherten Kennlinie oder einer entsprechenden Rechenvorschrift in den Lambdawert umgerechnet. Prominentester Anwendungsfall sind Verbrennungsmotoren, bei denen der Lambdawert des Abgases mittels im Abgaskanal verbauter Lambdasonden bestimmt wird, um in Abhängigkeit des ermittelten Lambdawertes das Luft-Kraftstoff-Verhältnis, mit dem der Motor betrieben wird, zu regeln. Diese Vorgehensweise wird im Allgemeinen als Lambdaregelung bezeichnet.

Es werden Sprung-Lambdasonden (auch Sprungantwort-Lamdasonde) und Breitbandlambdasonden unterschieden. Sprung-Lambdasonden liefern einen Signalverlauf nach dem Nernst-Prinzip, das bei Lambdawerten kleiner eins und größer eins im Wesentlichen konstant ist oder nur geringe Steigungen aufweist und im Bereich um Lambda gleich eins eine sprungartige Änderung zeigt. Somit werden Sprung-Lambdasonden üblicherweise nur für die Verbrennungsmotoren verwendet, die bei Lambda gleich eins geregelt werden. Demgegenüber zeigen Breitbandlambdasonden im gesamten Lambdabereich eine ausreichende Empfindlichkeit, weswegen sie einen breiteren Einsatz als Sprung-Lambdasonden erlauben, auf der anderen Seite jedoch wesentlich teurer als diese sind.

Eine Umrechnung des Sondensignals in einen Lambdawert ist in der Praxis jedoch dadurch erschwert, dass das Sondensignal nicht nur von der Abgaszusammensetzung abhängt, sondern auch durch zusätzliche Störeinflüsse beeinflusst wird, welche bewirken, dass die Kennlinie nicht unter allen Bedingungen konstant ist. Im Falle von Sprungsonden ist beispielsweise bekannt, dass die Sondentemperatur, das heißt die Temperatur des Messelementes der Sonde, einen Einfluss auf die Genauigkeit der Umrechnungsvorschrift beziehungsweise der Kennlinie hat. Dies wirkt sich insbesondere im fetten Lambdabereich, also bei Lambdawerten < 1, aus. Ferner ergeben sich Änderungen der Kennliniencharakteristik durch zunehmende Alterung des Messelementes der Sonde über die Betriebszeit. Darüber hinaus können verschiedene Abgasbestandteile wie Blei, Mangan, Phosphor oder Zink eine fortschreitende Vergiftung des Messelementes und somit eine Veränderung der Kennlinie verursachen.

Aus DE 100 36 129 A ist bekannt, Einflüsse der Temperatur auf das Sondensignal zu kompensieren. Zu diesem Zweck wird die Sondentemperatur in Abhängigkeit des Innenwiderstandes der Sonde aus einer gespeicherten Kennlinie ermittelt. Unter Verwendung eines dreidimensionalen Kennfeldes, das eine Korrekturspannung in Abhängigkeit von einer aktuellen Sondenistspannung und der zuvor ermittelten Sondentemperatur abbildet, wird sodann die aktuelle Korrekturspannung bestimmt, welche der aktuellen Sondenistspannung zuaddiert wird, um eine korrigierte Sondenspannung zu erhalten.

DE 199 19 427 A beschreibt ein Verfahren zur Korrektur einer Kennlinie einer Breitband-Lambdasonde, die stromauf eines Abgaskatalysators verbaut ist, wobei in einer Schubabschaltungsphase des Verbrennungsmotors das Sensorsignal der Lambdasonde ausgewertet und der so ermittelte Signalpegel für die Korrektur der Steigung der Kennlinie verwendet wird.

Aus DE 10 2007 015 362 A ist ein Verfahren zur Kalibrierung einer stromauf eines Katalysators angeordneten Sprung-Lambdasonde bekannt. Hierzu wird ein durch eine nachgeschaltete Referenz-Lambdasonde bereitgestelltes Messsignal ein Korrektursignal ermittelt und zur Kennlinienanpassung der Sprung-Lambdasonde verwendet.

US 5 270 009 A beschreibt eine Vorrichtung zur Bestimmung einer Sauerstoffkonzentration in einem Abgas eines Automobils, bei dem ein Einfluss der CO₂-Konzentration auf das Messergebnis berücksichtigt und kompensiert wird.

Nachteilig bei den bekannten Verfahren ist, dass trotz der Korrekturen die ermittelten Lambdawerte nur eine begrenzte Genauigkeit aufweisen. So zeigt ein Lambdawert, der aus dem Sondensignal einer Sprung-Lambdasonde erhalten wurde, in der Praxis trotz Temperaturkorrektur Abweichungen von Lambdawerten, die mit einer Breitbandlambdasonde unter gleichen Bedingungen erhalten wurden oder die für synthetische Gasgemischen bekannter Zusammensetzung berechnet wurden.

JP H02-293 655 A offenbart die Ermittlung eines Lambdawerts durch eine Breitbandlambdasonde, wobei Störeinflüsse durch den in Stickoxiden NOx gebundenen Sauerstoff auf das Sensorsignal korrigiert werden. Dabei wird die Sensorspannung erfasst und die NO_{X}-Konzentration des Abgases für jedes einzustellende Luftkraftstoffverhältnis entweder mit einem Sensor direkt gemessen oder in Abhängigkeit von Drehzahl Ne und Luftmasse A/N aus einem Kennfeld ermittelt oder interpoliert. Dann wird die in dem so ermittelte NOx-Gehalt vorhandene Sauerstoffkonzentration berechnet und das Sensorsignal durch Addition dieser Sauerstoffkonzentration im NOx korrigiert.

Aufgabe der vorliegenden Erfindung ist daher, ein Verfahren zu schaffen, welche die Ermittlung eines Lambdawertes oder einer Sauerstoffkonzentration eines Gasgemischs mit einer verbesserten Genauigkeit auch bei Verwendung einer Sprung-Lambdasonde erlaubt.

Diese Aufgabe wird durch ein Verfahren zur Ermittlung eines Lambdawertes oder einer Sauerstoffkonzentration eines Gasgemischs nach Anspruch 1 sowie durch einen entsprechenden Verbrennungsmotor , wie in Anspruch 8 definiert, gelöst.

Bei dem erfindungsgemäßen Verfahren zur Ermittlung eines Lambdawertes oder einer Sauerstoffkonzentration eines Gasgemischs, welches ein Abgas eines Verbrennungsmotors ist, wird mit einer Lambdasonde ein von dem Lambdawert beziehungsweise der Sauerstoffkonzentration abhängiges Sondensignal erfasst, in Abhängigkeit des Sondensignals mittels einer Kennlinie oder einer Rechenvorschrift der Lambdawert beziehungsweise die Sauerstoffkonzentration ermittelt und eine Korrektur eines Störeinflusses zumindest einer weiteren, von Sauerstoff unterschiedlichen Komponente des Gasgemischs auf das Sondensignal durchgeführt, wobei die Komponente Stickoxide (NO_{X}) umfasst. Erfindungsgemäß ist die Lambdasonde eine Sprung-Lambdasonde und es werden für unterschiedliche Lambdabereiche genau zwei unterschiedliche Störkomponenten-Korrekturfaktoren ermittelt, nämlich ein Korrekturfaktor für Lambdawerte kleiner eins und ein Korrekturfaktor für Lambdawerte größer eins.

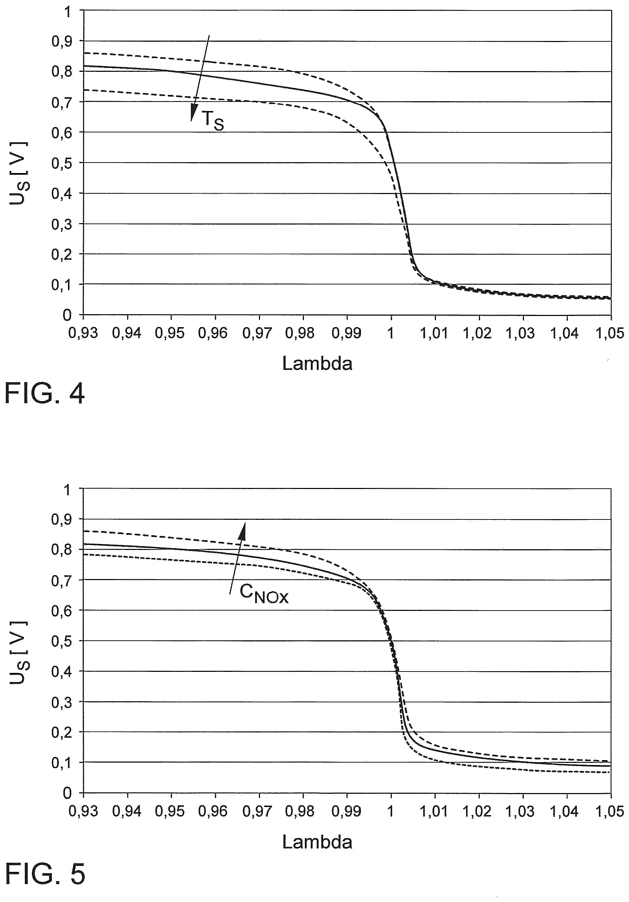

Durch die erfindungsgemäße Berücksichtigung von Einflüssen, welche die Gegenwart anderer Gaskomponenten als Sauerstoff auf das Lambdasignal aufweisen, lässt sich eine deutliche Verbesserung der Genauigkeit der Ermittlung des Lambdawertes beziehungsweise der Sauerstoffkonzentration erzielen. Es wurde nämlich festgestellt, dass das Sondensignal einer Lambdasonde nicht nur von der Sauerstoffkonzentration im Gasgemisch abhängt, sondern auch durch andere Gaskomponenten, insbesondere Stickoxide beeinflusst wird (siehe Figur 5). Diese von Sauerstoff unterschiedlichen Komponenten werden nachfolgend der Einfachheit halber auch als Störkomponente bezeichnet.

Es versteht sich, dass die Begriffe "Sauerstoffkonzentration" oder auch "Sauerstoffgehalt" und "Lambdawert" vorliegend als äquivalent betrachtet werden können, da diese Größen ineinander umgerechnet werden können und in jedem Fall den Gehalt des Gasgemischs an Sauerstoff O₂ jedoch mit unterschiedlichen Einheiten oder Bezugsgrößen bezeichnen. Sofern im Rahmen der vorliegenden Beschreibung somit von Bestimmung des Lambdawertes gesprochen wird, so versteht es sich, dass ebenso die Sauerstoffkonzentration oder eine beliebig andere äquivalente Größe gemeint sein kann.

Erfindungsgemäß erfolgt die Korrektur des Einflusses der zumindest einen, von Sauerstoff unterschiedlichen Komponente (Störkomponente), indem der Störkomponenten-Korrekturfaktor in Abhängigkeit von einer Konzentration dieser weiteren Gaskomponente oder in Abhängigkeit eines Parameters, der mit der Konzentration dieser Gaskomponente korreliert, ermittelt wird und auf die verwendete Kennlinie oder Rechenvorschrift oder der auf den ermittelten Lambdawert beziehungsweise die ermittelte Sauerstoffkonzentration angewendet wird. Demnach besteht einerseits die Möglichkeit, die Konzentration der Störkomponente direkt zu bestimmen, beispielsweise mittels eines geeigneten Gassensors zu messen, oder indirekt über Parameter zu ermitteln, welche eine Aussage über die Konzentration zulassen. Da das Gasgemisch ein Abgas eines Verbrennungsmotors ist, lässt sich die Konzentration beispielsweise über Parameter bestimmen, welche einen aktuellen Betriebspunkt des Verbrennungsmotors bezeichnen. Vorzugsweise wird in diesem Fall eine aktuelle Motordrehzahl und/oder eine aktuelle relative Motorlast herangezogen, um den Störkomponenten-Korrekturfaktor zu ermitteln. Beispielsweise kann vorgesehen sein, den Korrekturfaktor zur Korrektur des Einflusses der Störkomponente in Form eines Kennfeldes in Abhängigkeit von der Motordrehzahl und der Motorlast zu hinterlegen. Optional kann das Kennfeld die Konzentration der Störkomponente in Abhängigkeit dieser Parameter darstellen und der Korrekturfaktor in Abhängigkeit der Konzentration der Störkomponente mittels einer geeigneten mathematischen Rechenvorschrift oder einer gespeicherten Kennlinie ermittelt werden. Der Störkomponenten-Korrekturfaktor kann einerseits auf die verwendete Kennlinie der Lambdasonde (oder die Rechenvorschrift) angewendet werden, so dass eine korrigierte Kennlinie beziehungsweise eine korrigierte Rechenvorschrift erhalten wird. In diesem Fall liefert die Ermittlung des Lambdawertes in Abhängigkeit von dem Sondensignal aus dem korrigierten Kennfeld direkt einen korrigierten Lambdawert, der bereits den Störeinfluss der Störkomponente berücksichtigt. Bevorzugt ist jedoch, zunächst einen unkorrigierten Lambdawert aus der nicht störkomponenten-korrigierten Kennlinie zu ermitteln und erst anschließend den Störkomponenten-Korrekturfaktor auf den unkorrigierten Lambdawert anzuwenden. Dabei wird im Rahmen der vorliegenden Erfindung unter dem Begriff "Anwenden eines Korrekturfaktors" eine geeignete Verrechnung des Korrekturfaktors mit dem zu korrigierenden Objekt verstanden, welche eine Multiplikation, Division, Addition und Subtraktion beinhalten kann. Es versteht sich somit, dass unter dem Begriff "Korrekturfaktor" nicht nur Multiplikatoren, sondern auch andere Rechengrößen verstanden werden.

Erfindungsgemäß werden für unterschiedliche Lambdabereiche genau zwei unterschiedliche Störkomponenten-Korrekturfaktoren zur Korrektur der Einflüsse von Störkomponenten ermittelt. Dabei ist vorgesehen, einen Korrekturfaktor für Lambdawerte < 1 und einen Korrekturfaktor für Lambdawerte > 1 zu ermitteln. Mit anderen Worten werden für jede Konzentration der Störkomponente beziehungsweise für jeden korrelierenden Parameter zwei Korrekturfaktoren vorgehalten, nämlich einer für fette und ein weiterer für magere Gasgemische. Durch diese Maßnahme wird eine weitere Verbesserung der Genauigkeit der Ermittlung des Lambdawertes erzielt, da der Einfluss von Störkomponenten auf das Sondensignal sich für unterschiedliche Lambdabereiche in unterschiedlichem Ausmaß auswirken kann, der Sauerstoff und die Störkomponente somit einen Quereinfluss zeigen können.

Erfindungsgemäß umfasst die zumindest eine weitere, von Sauerstoff unterschiedliche Komponente des Gasgemischs Stickoxide NO_{X}, somit zumindest eine der Komponenten NO, NO₂, N₂O. Es wurde nämlich beobachtet, dass Stickoxide, die insbesondere in Abgasen von Verbrennungsmotoren vorliegen, eine relativ starke Beeinflussung des Sondensignals hervorrufen. Selbstverständlich kann die erfindungsgemäße Korrektur auch zusätzliche Störkomponenten umfassen, beispielsweise Kohlenmonoxid CO, Kohlendioxid CO₂, unverbrannte Kohlenwasserstoffe HC, Wasserstoff H₂ und andere.

In besonders bevorzugter Ausführung der Erfindung erfolgt neben der erfindungsgemäßen Korrektur der Einflüsse von Störkomponenten zusätzlich eine Korrektur des Temperatureinflusses auf das Sondensignal. Durch die Durchführung der Temperaturkorrektur sowie der erfindungsgemäßen Störkomponentenkorrektur wird die Genauigkeit der Lambdabestimmung gegenüber dem Stand der Technik, in dem lediglich eine Korrektur des Temperatureinflusses vorgenommen wird, wesentlich verbessert, da die Temperatur, insbesondere die Sondentemperatur, bekanntermaßen einen relativ starken Einfluss auf das Lambdasondensignal ausübt. Dies trifft insbesondere bei Sprung-Lambdasonden bei Lambdawerten < 1 zu (siehe Figur 4). Verfahren zur Temperaturkorrektur von Lambdasondensignalen sind im Stand der Technik bekannt und können hier Einsatz finden. Vorzugsweise erfolgt die Temperaturkorrektur, indem in Abhängigkeit von der Temperatur der Lambdasonde oder in Abhängigkeit von einer Größe, die mit der Sondentemperatur korreliert, ein Temperatur-Korrekturfaktor ermittelt wird. Dieser Korrekturfaktor kann, wie bereits bei der erfindungsgemäßen Störkomponentenkorrektur beschrieben, entweder auf die verwendete Sondenkennlinie oder Rechenvorschrift angewendet werden oder auf den daraus ermittelten Lambdawert beziehungsweise die ermittelte Sauerstoffkonzentration.

Nach einer weiteren vorteilhaften Ausgestaltung der Erfindung erfolgt zusätzlich zur erfindungsgemäßen Störkomponentenkorrektur und gegebenenfalls der Temperaturkorrektur eine Korrektur eines Einflusses einer Alterung der Lambdasonde. Dabei wird vorliegend unter dem Begriff Alterung sowohl eine mechanische Alterung der Lambdasonde verstanden, beispielsweise einer Alterung des Sondenelements infolge von thermischer Belastung, als auch eine Alterung der Elektronik der Sonde und nicht zuletzt auch eine Vergiftung der Sonde infolge von bestimmten Bestandteilen des Gasgemischs, beispielsweise Blei, Mangan, Phosphor, Zink und anderen Komponenten. Die Alterungskorrektur wird vorzugsweise nach der Korrektur des Einflusses der Störkomponente durchgeführt. Vorzugsweise wird in Abhängigkeit von der ermittelten Alterung der Lambdasonde ein Alterungs-Korrekturfaktor ermittelt, der wiederum auf die verwendete Sondenkennlinie oder Rechenvorschrift oder aber auf den daraus ermittelten Lambdawert beziehungsweise auf die ermittelte Sauerstoffkonzentration angewendet werden kann. Verfahren zur Bestimmung der Alterung von Lambdasonden sind im Stand der Technik bekannt und können im Rahmen der Erfindung Einsatz finden.

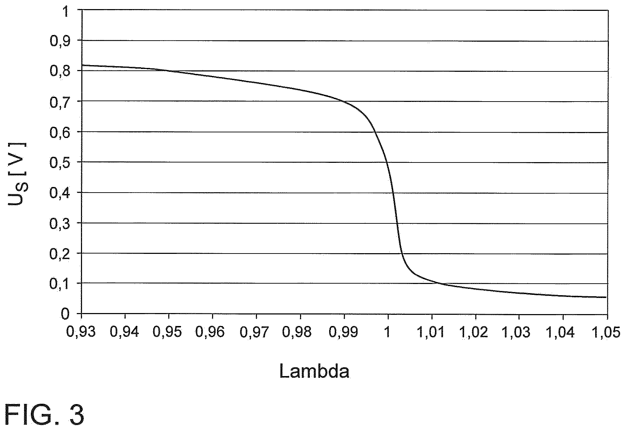

Bei der Lambdasonde handelt es sich um eine Sprung-Lambdasonde, das heißt eine Sonde, die ein Signal nach dem Nernst-Prinzip erzeugt (siehe Figur 3). Durch die erfindungsgemäße Korrektur des Sondensignals einer Sprung-Lambdasonde beziehungsweise des daraus ermittelten Lambdawertes wird eine so hohe Präzision der Lambdawertermittlung erreicht, dass das Einsatzgebiet der Sprung-Lambdasonde signifikant erweitert werden kann. Während im Stand der Technik Sprung-Lambdasonden im Wesentlichen für λ = 1 geregelte Motoren verwendet werden, kann der Anwendungsbereich einer Sprung-Lambdasonde, die mit dem erfindungsgemäßen Verfahren prozessiert wird, auf Lambdabereiche ausgedehnt werden, welche herkömmlich nur mit kostspieligen Breitband-Lambdasonden geregelt werden können.

Die Erfindung betrifft weiterhin eine Vorrichtung zur Ermittlung eines Lambdawertes oder einer Sauerstoffkonzentration eines Gasgemischs. Die Vorrichtung umfasst einen Verbrennungsmotor mit einer in einem Abgaskanal angeordneten Sprung-Lambdasonde zur Erfassung eines von einem Lambdawert oder einer Sauerstoffkonzentration eines Abgases des Verbrennungsmotors abhängigen Sondensignals und mit einer Einrichtung, die zur Ausführung des erfindungsgemäßen Verfahrens eingerichtet ist. Insbesondere umfasst diese Einrichtung entsprechende computerlesbare Algorithmen zur Durchführung des Verfahrens sowie entsprechende Kennlinien, Kennfelder oder Umrechnungsvorschriften.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: eine Verbrennungskraftmaschine mit einer Einrichtung zur Ermittlung eines Lambdawertes gemäß des Verfahrens der vorliegenden Erfindung,
- Figur 2: ein Fließdiagramm eines Verfahrensablaufs zur Durchführung der Ermittlung eines Lambdawertes eines Gasgemischs nach einer bevorzugten Ausgestaltung der Erfindung,
- Figur 3: eine Kennlinie einer Sprung-Lambdasonde,
- Figur 4: Kennlinien einer Sprung-Lambdasonde für verschiedene Temperaturen und
- Figur 5: Kennlinien einer Sprung-Lambdasonde für verschiedene NO_{X}-Konzentrationen.

Zunächst soll nachfolgend ein bevorzugter Anwendungsfall der Erfindung erläutert werden, bei der es sich bei dem Gasgemisch, dessen Sauerstoffgehalt (Lambdawert) bestimmt werden soll, um das Abgas eines Verbrennungsmotors handelt.

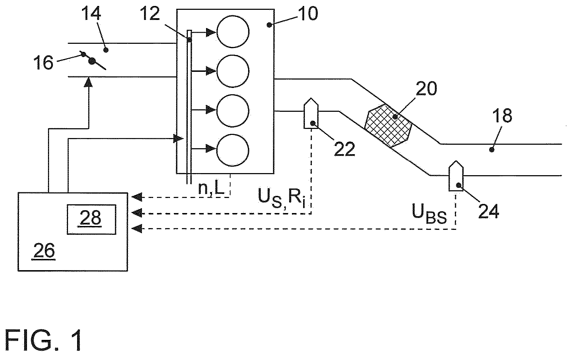

Figur 1 zeigt beispielhaft einen solchen Verbrennungsmotor 10, dessen Kraftstoffversorgung über eine Kraftstoffeinspritzanlage 12 erfolgt. Bei der Einspritzanlage 12 kann es sich um eine Saugrohreinspritzung oder eine Zylinderdirekteinspritzung handeln. Der Verbrennungsmotor 10 wird ferner über ein Ansaugrohr 14 mit Verbrennungsluft versorgt. Gegebenenfalls kann die zugeführte Luftmenge über ein in dem Ansaugrohr 14 angeordnetes steuerbares Stellelement 16, beispielsweise einer Drosselklappe, reguliert werden.

Ein von dem Verbrennungsmotor 10 erzeugtes Abgas wird über einen Abgaskanal 18 in die Umgebung entlassen, wobei umweltrelevante Abgasbestandteile durch einen Katalysator 20 umgesetzt werden.

Innerhalb des Abgaskanals 18 ist an einer motornahen Position eine Lambdasonde 22 angeordnet, bei der es sich insbesondere um eine Sprung-Lambdasonde handelt. Gegebenenfalls kann eine weitere Abgassonde 24 stromab des Katalysators 20 angeordnet sein, bei der es sich ebenfalls um eine Lambdasonde, insbesondere eine Breitband-Lambdasonde, oder um einen NO_{X}-Sensor handeln kann.

Die Signale der Abgassonden 22 und 24, insbesondere die Sondensignale (Sondenspannungen) U_{S} der motornahen Lambdasonde 22 und U_{BS} der nachgeschalteten Lambdasonde sowie der Innenwiderstand Rᵢ des Sensorelements der vorderen Sonde 22, werden an eine Motorsteuerung 26 übermittelt. Weitere Signale nicht dargestellter Sensoren gehen ebenfalls in die Motorsteuerung 26 ein. So erhält die Motorsteuerung auch Daten des Verbrennungsmotors 10, die beispielsweise die aktuelle Motordrehzahl n und die aktuelle relative Motorlast L als Parameter umfassen, welche den Betriebspunkt des Motors kennzeichnen. Die Motorsteuerung 26 steuert in Abhängigkeit der eingehenden Signale in bekannter Weise verschiedene Komponenten des Verbrennungsmotors 10 an. Insbesondere erfolgt in Abhängigkeit von dem Sondensignal U_{S} (Sondenspannung) der motornahen Lambdasonde 22 eine Regelung des dem Verbrennungsmotor zuzuführenden Luft-Kraftstoff-Gemischs, wofür die Motorsteuerung 26 eine über die Kraftstoffeinspritzanlage 12 zuzuführende Kraftstoffmenge und/oder eine über die Ansauganlage 14 zuzuführende Luftmenge regelt. Die Motorsteuerung 26 umfasst eine Einrichtung 28, welche zur Ausführung des erfindungsgemäßen Verfahrens zur Ermittlung des Lambdawertes des Abgases des Verbrennungsmotors 10 eingerichtet ist. Zu diesem Zweck enthält die Einrichtung 28 einen entsprechenden Algorithmus in computerlesbarer Form sowie geeignete Kennlinien und Kennfelder.

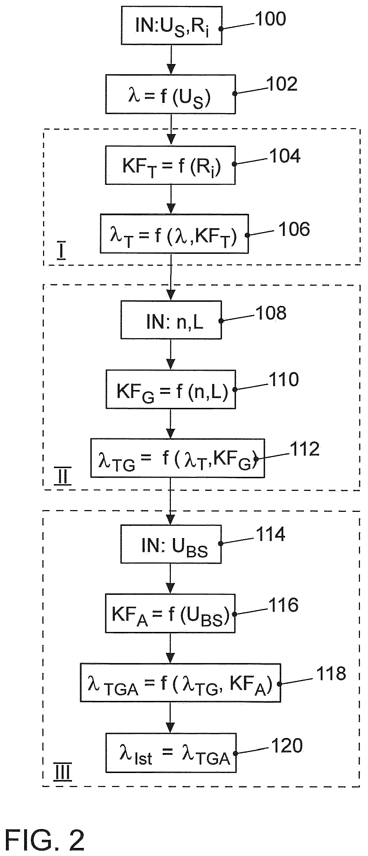

Figur 2 zeigt einen Verfahrensablauf zur Ermittlung eines Lambdawertes eines Gasgemischs nach einer bevorzugten Ausführung der Erfindung. Bei dem Gasgemisch handelt es sich im dargestellten Beispiel um das Abgas eines Verbrennungsmotors 10, wie er in Figur 1 dargestellt ist. Ein entsprechender, diesen Ablauf ausführender Algorithmus ist zusammen mit verschiedenen Kennlinien und Kennfeldern in der Einrichtung 28 in computerlesbarer Form hinterlegt.

Das Verfahren beginnt in Schritt 100, wo Signale der motornahen Sprung-Lambdasonde 22 von der Einrichtung 28 eingelesen werden. Dabei handelt es sich um das Sondensignal (Sondenspannung) U_{S} sowie den Innenwiderstand Rᵢ des Sensorelements. Im anschließenden Schritt 102 erfolgt die Ermittlung eines Lambdawertes λ als Funktion der Sondenspannung U_{S}. Zu diesem Zweck kann beispielsweise auf eine in der Einrichtung 28 hinterlegte Kennlinie zurückgegriffen werden, welche den Lambdawert als Funktion der Sondenspannung darstellt. Eine solche Kennlinie einer Sprung-Lambdasonde ist beispielsweise in Figur 3 dargestellt. Alternativ kann die Umrechnung des Sondensignals in den Lambdawert durch eine geeignete Rechenvorschrift erfolgen.

In dem anschließenden Block I erfolgt nun eine Temperaturkorrektur des Lambdawertes λ. Hierfür wird zunächst in Schritt 104 ein Temperatur-Korrekturfaktor KF_{T} ermittelt. Dies kann beispielsweise mittels eines Verfahrens erfolgen, wie es in DE 100 36 129 A1 beschrieben ist. Insbesondere wird hier der in Schritt 100 eingelesene Innenwiderstandswert Rᵢ der Lambdasonde 22 verwendet, der mit der Sondentemperatur korreliert. Zur Ermittlung des Temperatur-Korrekturfaktors KF_{T} kann beispielsweise eine gespeicherte Kennlinie, welche den Korrekturfaktor KF_{T} als Funktion des Innenwiderstands Rᵢ darstellt, verwendet werden. Da der Einfluss der Sondentemperatur auf das Sondensignal nicht im gesamten Lambdabereich gleich ist (siehe Figur 4), kann der Korrekturfaktor KF_{T} zusätzlich auch als Funktion von Lambda dargestellt werden. In diesem Fall wird ein dreidimensionales Kennfeld verwendet, welches den Korrekturfaktor KF_{T} als Funktion der Sondentemperatur (bzw. des Innenwiderstandes Rᵢ) sowie des Lambdawertes darstellt. In einem anschließenden Schritt 106 erfolgt dann die Temperaturkorrektur des Lambdawertes, indem der Temperatur-Korrekturfaktor KF_{T} auf den in Schritt 102 ermittelten Lambdawert λ angewendet wird. Ergebnis der Lambdakorrektur in Block I ist ein temperaturkorrigierter Lambdawert λ_{T}.

Im anschließenden Block II erfolgt die erfindungsgemäße Störkomponentenkorrektur, in welcher der Einfluss einer im Abgas vorliegenden Störkomponente auf das Sondensignal U_{S} korrigiert wird. Dies wird am Beispiel der Komponente NO_{X} gezeigt. Wie aus Figur 5 ersichtlich ist, weist das Sensorsignal U_{S}, das in Gegenwart einer vergleichsweise hohen NO_{X}-Konzentration gemessen wurde (Figur 5, gestrichelte Linie), über den gesamten Lambdabereich höhere Werte auf als in Gegenwart einer relativ niedrigen NO_{X}-Konzentration (gepunktete Linie). Dieser Effekt ist bei Lambdawerten unterhalb von 1 etwas stärker ausgeprägt.

Zurückkommend zu Figur 2 erfolgt nun die Störkomponentenkorrektur, indem zunächst in Schritt 108 Parameter eingelesen werden, welche einen aktuellen Betriebspunkt des Verbrennungsmotors 10 charakterisieren und die stellvertretend für die NO_{X}-Konzentration sind. Im vorliegenden Beispiel handelt es sich um die aktuelle Motordrehzahl n sowie die aktuelle relative Motorlast L. Da der Betrieb des Verbrennungsmotors 10 durch die Motorsteuerung 26 in Abhängigkeit von diesen Parametern erfolgt, insbesondere die Luftkraftstoffversorgung des Motors 10 in Abhängigkeit dieser Parameter gesteuert wird, lässt sich der Betriebspunkt des Motors direkt mit der NO_{X}-Konzentration korrelieren. Insbesondere erfolgt in Schritt 110 die Ermittlung eines Störkomponenten-Korrekturfaktors KF_{G} in Abhängigkeit von der Drehzahl n und der Motorlast L. Zu diesem Zweck kann auf ein entsprechendes Kennfeld zurückgegriffen werden, welches den Korrekturfaktor KF_{G} in Abhängigkeit dieser Parameter darstellt. In Abweichung von dem dargestellten Beispiel kann der Korrekturfaktor KF_{G} auch unterschiedlich bestimmt werden, je nachdem, ob ein fettes oder mageres Luftkraftstoffgemisch vorliegt, um die unterschiedliche Ausprägung der Störwirkung von NO_{X} auf das Sondensignal zu berücksichtigen (siehe Figur 5).

Im anschließenden Schritt 112 erfolgt dann die Anwendung des Störkomponenten-Korrekturfaktors KF_{G}, auf den in Schritt 106 ermittelten temperaturkorrigierten Lambdawert λ_{T}. Ergebnis der Störkomponentenkorrektur des Blocks II ist ein temperatur- sowie störkomponentenkorrigierter Lambdawert λ_{TG}.

Das Verfahren geht dann zu Block III über, in welchem eine Alterungskorrektur des Lambdawertes erfolgt. Zu diesem Zweck wird in Schritt 114 das Sondensignal U_{BS} der nachgeschalteten Breitbandlambdasonde 24 (siehe Figur 1) eingelesen. Dabei dient die Sonde 24 als Referenzsonde, so dass der mit dem Sondensignal U_{BS} ermittelte Lambdawert als tatsächlicher Lambdawert angenommen werden kann. Aus dem Maß einer mittleren Abweichung der mit den beiden Sonden 22 und 24 ermittelten Lambdawerte wird dann in Schritt 160 ein Alterungs-Korrekturfaktor KF_{A} ermittelt. Geeignete Verfahren zur Ermittlung eines Korrekturfaktors für die Alterung, beispielsweise mittels einer nachgeschalteten Referenzsonde, sind im Stand der Technik bekannt (zum Beispiel DE 10 2007 015 362 A1) und können hier zur Anwendung kommen. In Schritt 118 erfolgt dann die Anwendung des Alterungs-Korrekturfaktors KF_{A} auf den temperatur- und störkomponentenkorrigierten Lambdawert λ_{TG}. Das Ergebnis der Alterungskorrektur in Block III ist dann ein temperaturkorrigierter, störkomponentenkorrigierter und alterungskorrigierter Lambdawert λ_{TGA}.

Der dreifach korrigierte Lambdawert λ_{TGA} wird in Schritt 120 als Lambdaistwert λ_{Ist} für die Steuerung des Verbrennungsmotors übergeben. Insbesondere kann er als Istwert für die Lambdaregelung des dem Verbrennungsmotor 10 zuzuführenden Luftkraftstoffgemischs verwendet werden.

### Bezugszeichenliste

- 10: Verbrennungsmotor
- 12: Kraftstoffeinspritzanlage
- 14: Ansauganlage
- 16: Stellelement
- 18: Abgaskanal
- 20: Katalysator
- 22: Lambdasonde/Sprung-Lambdasonde
- 24: Abgassonde
- 26: Motorsteuerung
- 28: Einrichtung

## Patentansprüche

1. Verfahren zur Ermittlung eines Lambdawertes oder einer Sauerstoffkonzentration eines Gasgemischs, welches ein Abgas eines Verbrennungsmotors (10) ist, wobei mit einer Lambdasonde (22) ein von dem Lambdawert beziehungsweise der Sauerstoffkonzentration abhängiges Sondensignal erfasst wird, mittels einer Kennlinie oder einer Rechenvorschrift der Lambdawert beziehungsweise die Sauerstoffkonzentration in Abhängigkeit des Sondensignals ermittelt wird, und eine Korrektur eines Störeinflusses zumindest einer weiteren, von Sauerstoff unterschiedlichen Komponente des Gasgemischs, die Stickoxide (NO_{X}) umfasst, auf das Sondensignal durchgeführt wird, wobei, die Korrektur des Störeinflusses erfolgt, indem in Abhängigkeit von einer Konzentration der zumindest einen weiteren Komponente im Gasgemisch oder in Abhängigkeit von zumindest einem, mit der Konzentration der zumindest einen weiteren Komponente korrelierenden Parameter ein Störkomponenten-Korrekturfaktor (KF_{G}) ermittelt wird, der auf die verwendete Kennlinie oder Rechenvorschrift oder auf den ermittelten Lambdawert beziehungsweise der ermittelten Sauerstoffkonzentration angewendet wird, **dadurch gekennzeichnet, dass**
die Lambdasonde (22) eine Sprung-Lambdasonde ist, und
für unterschiedliche Lambdabereiche genau zwei unterschiedliche Störkomponenten-Korrekturfaktoren (KF_{G}) ermittelt werden, wobei ein Korrekturfaktor für Lambdawerte kleiner eins und ein Korrekturfaktor für Lambdawerte größer eins ermittelt werden.

2. Verfahren nach Anspruch 1, **dadurch gekennzeichnet, dass** der zumindest eine, mit der Konzentration der zumindest einen weiteren Komponente korrelierende Parameter einen aktuellen Betriebspunkt des Verbrennungsmotors (10) bezeichnet, insbesondere eine aktuelle Motordrehzahl (n) und/oder eine aktuelle relative Motorlast (L) umfasst.

3. Verfahren nach einem der vorhergehenden Ansprüche, **dadurch gekennzeichnet, dass** zusätzlich eine Korrektur eines Einflusses der Temperatur auf das Sondensignal durchgeführt wird, wobei die Temperaturkorrektur insbesondere vor der Korrektur des Einflusses der zumindest einen weiteren Komponente des Gasgemischs erfolgt.

4. Verfahren nach Anspruch 3, **dadurch gekennzeichnet, dass** die Temperaturkorrektur erfolgt, indem in Abhängigkeit von der Temperatur (T_{S}) der Lambdasonde oder in Abhängigkeit von einer mit der Temperatur (T_{S}) korrelierenden Größe ein Temperatur-Korrekturfaktor (KF_{T}) ermittelt wird, der auf die verwendete Kennlinie oder Rechenvorschrift oder auf den ermittelten Lambdawert beziehungsweise der ermittelten Sauerstoffkonzentration angewendet wird.

5. Verfahren nach einem der vorhergehenden Ansprüche, **dadurch gekennzeichnet, dass** zusätzlich eine Korrektur eines Einflusses einer Alterung der Lambdasonde (22) durchgeführt wird, wobei die Alterungskorrektur insbesondere nach der Korrektur des Einflusses der zumindest einen weiteren Komponente des Gasgemischs erfolgt.

6. Verfahren nach Anspruch 5, **dadurch gekennzeichnet, dass** die Alterungskorrektur erfolgt, indem in Abhängigkeit von der Alterung der Lambdasonde ein Alterungs-Korrekturfaktor (KF_{A}) ermittelt wird, der auf die verwendete Kennlinie oder Rechenvorschrift oder auf den ermittelten Lambdawert beziehungsweise der ermittelten Sauerstoffkonzentration angewendet wird.

7. Verfahren nach einem der vorhergehenden Ansprüche, **dadurch gekennzeichnet, dass** der ermittelte Lambdawert im Rahmen einer Lambdaregelung eines Verbrennungsmotors (10) verwendet wird.

8. Verbrennungsmotor (10) mit einer in einem Abgaskanal (18) angeordneten Sprung-Lambdasonde (22) zur Erfassung eines von einem Lambdawertes oder einer Sauerstoffkonzentration eines Abgases des Verbrennungsmotors (10) abhängigen Sondensignals, und mit einer Einrichtung (28), die zur Ausführung des Verfahrens nach einem der Ansprüche 1 bis 7 eingerichtet ist.

## Claims

1. Method for determining a lambda value or an oxygen concentration of a gas mixture, which is an exhaust gas of an internal combustion engine (10), wherein a sensor signal dependent upon the lambda value or the oxygen concentration is detected by means of a lambda sensor (22), the lambda value or the oxygen concentration is determined as a function of the sensor signal by means of a characteristic curve or a calculation rule, and a correction of a perturbation of at least one further component, differing from oxygen, of the gas mixture, which comprises nitrogen oxides (NOx), is carried out on the sensor signal, wherein the correction of the perturbation is carried out by determining a disturbing component correction factor (KF_{G}) as a function of a concentration of the at least one further component in the gas mixture or as a function of at least one parameter correlating with the concentration of the at least one further component, which correction factor is applied to the characteristic curve or calculation rule used or to the lambda value determined or to the oxygen concentration determined, **characterized in that**
the lambda sensor (22) is a jump lambda sensor, and
exactly two different disturbance component correction factors (KF_{G}) are determined for different lambda ranges, wherein a correction factor for lambda values of less than one and a correction factor for lambda values of greater than one are determined.

2. Method according to claim 1, **characterized in that** the at least one parameter correlating with the concentration of the at least one further component denotes a current operating point of the internal combustion engine (10), and in particular comprises a current engine speed (n) and/or a current relative engine load (L).

3. Method according to one of the preceding claims, **characterized in that,** additionally, a correction of an influence of the temperature on the sensor signal is carried out, wherein the temperature correction is carried out in particular before the correction of the influence of the at least one further component of the gas mixture.

4. Method according to claim 3, **characterized in that** the temperature correction is carried out by determining a temperature correction factor (KF_{T}) as a function of the temperature (Ts) of the lambda sensor or as a function of a variable correlating with the temperature (Ts), which temperature correction factor (KF_{T}) is applied to the characteristic curve or calculation rule used or to the lambda value determined or to the oxygen concentration determined.

5. Method according to one of the preceding claims, **characterized in that,** additionally, a correction of the influence of an aging of the lambda sensor (22) is carried out, wherein the aging correction is carried out in particular after the correction of the influence of the at least one further component of the gas mixture.

6. Method according to claim 5, **characterized in that** the aging correction is carried out by determining an aging correction factor (KF_{A}) as a function of the aging of the lambda sensor, which aging correction factor (KF_{A}) is applied to the characteristic curve or calculation rule used or to the lambda value determined or to the oxygen concentration determined.

7. Method according to one of the preceding claims, **characterized in that** the lambda value determined is used in the framework of a lambda control of an internal combustion engine (10).

8. Internal combustion engine (10) having a jump lambda sensor (22), arranged in an exhaust channel (18), for detecting a sensor signal dependent upon a lambda value or an oxygen concentration of an exhaust gas of the internal combustion engine (10), and having a device (28) that is configured to carry out the method according to one of claims 1 through 7.

## Revendications

1. Procédé permettant la détermination d'une valeur lambda ou d'une concentration en oxygène d'un mélange gazeux qui est un gaz d'échappement d'un moteur à combustion interne (10), un signal de sonde dépendant de la valeur lambda ou de la concentration en oxygène étant détecté avec une sonde lambda (22), la valeur lambda ou la concentration en oxygène étant déterminée en fonction du signal de sonde au moyen d'une courbe caractéristique ou d'une règle de calcul, et une correction d'une influence perturbatrice d'au moins un autre composant du mélange gazeux autre que l'oxygène et comprenant des oxydes d'azote (NO_{X}) étant réalisée sur le signal de sonde, la correction de l'influence perturbatrice étant effectuée par la détermination d'un facteur de correction de composants perturbateurs (KF_{G}) en fonction d'une concentration de l'au moins un autre composant dans le mélange gazeux ou en fonction d'au moins un paramètre en corrélation avec la concentration de l'au moins un autre composant, ledit facteur de correction de composants perturbateurs étant appliqué à la courbe caractéristique ou à la règle de calcul utilisée ou à la valeur lambda ou à la concentration en oxygène déterminée,
**caractérisé en ce que**
la sonde lambda (22) est une sonde lambda à réponse transitoire, et
exactement deux facteurs de correction de composants perturbateurs (KF_{G}) différents sont déterminés pour des gammes lambda différentes, un facteur de correction pour des valeurs lambda inférieures à un et un facteur de correction pour des valeurs lambda supérieures à un étant déterminés.

2. Procédé selon la revendication 1, **caractérisé en ce que** l'au moins un paramètre en corrélation avec la concentration de l'au moins un autre composant désigne un point de fonctionnement actuel du moteur à combustion interne (10), en particulier une vitesse de rotation de moteur actuelle (n) et/ou une charge de moteur relative actuelle (L).

3. Procédé selon l'une des revendications précédentes,
**caractérisé en ce qu'une** correction d'une influence de la température sur le signal de sonde est en outre réalisée, la correction de température étant effectuée en particulier avant la correction de l'influence de l'au moins un autre composant du mélange gazeux.

4. Procédé selon la revendication 3, **caractérisé en ce que** la correction de température est effectuée par la détermination d'un facteur de correction de température (KF_{T}) en fonction de la température (Ts) de la sonde lambda ou en fonction d'une grandeur en corrélation avec la température (Ts), ledit facteur de correction de température est appliqué à la courbe caractéristique ou à la règle de calcul utilisée ou à la valeur lambda ou à la concentration en oxygène déterminée.

5. Procédé selon l'une des revendications précédentes,
**caractérisé en ce qu'**une correction d'une influence d'un vieillissement de la sonde lambda (22) est en outre réalisée, la correction de vieillissement étant effectuée en particulier après la correction de l'influence de l'au moins un autre composant du mélange gazeux.

6. Procédé selon la revendication 5, **caractérisé en ce que** la correction de vieillissement est effectuée par la détermination d'un facteur de correction de vieillissement (KF_{A}) en fonction du vieillissement de la sonde lambda, ledit facteur de correction de vieillissement est appliqué à la courbe caractéristique ou à la règle de calcul utilisée ou à la valeur lambda ou à la concentration en oxygène déterminée.

7. Procédé selon l'une des revendications précédentes,
**caractérisé en ce que** la valeur lambda déterminée est utilisée dans le cadre d'une régulation lambda d'un moteur à combustion interne (10).

8. Moteur à combustion interne (10) comportant une sonde lambda (22) à réponse transitoire disposée dans un conduit de gaz d'échappement (18) pour la détection d'un signal de sonde dépendant d'une valeur lambda ou d'une concentration en oxygène d'un gaz d'échappement du moteur à combustion interne (10), et comportant un dispositif (28) qui est configuré pour exécuter le procédé selon l'une des revendications 1 à 7.
